# EUROPEAN PATENT APPLICATION

(11) **EP 0 831 324 A2**
(43) Date of publication of application: **25.03.1998**
(21) Application number: 97401704.8
(22) Date of filing: 15.07.1997
(51) Int. Cl.: G01N 29/04, G01N 29/10

(54) **Impurity control**

(30) Priority: 18.09.1996 NO 963912
(71) Applicant: ALCATEL ALSTHOM COMPAGNIE GENERALE D'ELECTRICITE, 75008 Paris (FR)
(72) Inventor: Steen, Kay Johnny, 7053 Ranheim (NO)
(74) Representative: Mende, Eberhard, Dipl.-Ing.

(57) **Abstract**

This invention relates to method and means for testing properties of an electrical cable by subjecting the cable core to excitation signals (first signals) and by passing the cable through means for monitoring and analyzing signals (second signals) reflected from the cable core. This is obtained by using first and second signals in the 2-20 MHz range for the purpose of detecting impurities and microvoids greater than 5 micrometers in extruded or wound, crosslinked or not crosslinked polymer insulation (4) of a high voltage power conductor.

## Description

The present invention relates to method and means for testing properties of an electrical cable by subjecting the cable core to excitation signals (first signals) and by passing the cable through means for monitoring and analyzing signals (second signals) reflected from the cable core.

UK Patent Application No 2 232 250 describes means for ultrasonic testing of mineral insulated cable during manufacture. Such cables are provided with a metal tube made by folding and welding an advancing metal strip. Ultrasonic vibrations are continuously introduced into the welded region to interact with defects to produce an echo or undergo a change in the signal strength. The advancing tube is continuously monitored to detect such echoes or change in signal strength. The patent specification also mentions that faults in the mineral insulation can be detected. The advancing tube is marked to indicate the location of the defects detected.

The present invention relates in particular to testing of a high voltage power conductor having extruded crosslinked polymer insulation, under laboratory conditions but particularly during manufacture of the cable.

It is well known that impurities and microvoids may be detrimental to the high voltage cable insulation and the object of the invention is to make a full quality control of the cable insulation.

The apparatus described in the mentioned UK patent is not suitable for controlling the polymer insulation of a high voltage power cable. The arrangement of sending signals from a transmitter on one side of the cable, through the cable construction, to a receiver on the other side of the cable, will not be capable of detecting defects smaller than 1-2 mm. A further factor is that defects in the insulation material underneath the metal tube will hardly be detected, as the tube most probably will shield signals echoed back from the insulation layer.

Conventional methods for discovering small impurities and microvoids in the polymer insulation of high voltage power cables are usually laboratory layouts requiring destructive testing. Cuts taken from samples of cable insulation are examined in microscopes, and partial discharge tests are taken on short cable lengths.

It is important when making polymer insulated power cables to take all precautions in order to prevent impurities from reaching the extruder heads, - and when wound insulation is concerned to check the quality of the tapes before application on the cable conductor.

However, from a quality assurance point of view it is important to detect detrimental impurities and microvoids in the cable insulation before applying the outer protective layers and before presenting the cable to the customer.

The features of the present invention are defined in the accompanying patent claims. The invention enables non-destructive full testing of the insulation layer(s) of a high voltage power cable, preferably during manufacture of the cable, and before providing metal sheaths and shields. The testing means of the invention can, however, also be used in a laboratory for non destructive testing of short cable lengths and cable joints.

The present invention is based on using first and second signals in the 2-20 MHz range for the purpose of detecting impurities and microvoids greater than 5 micrometers in extruded or wound, crosslinked or not crosslinked polymer insulation (4) of a high voltage power conductor.

When used for analyzing wound insulation consisting of a number of wound polymer tapes, a signal pattern caused by the voids between tape sides will be regular and can be ruled out when looking for irregularities in the wound insulation. The analyzing equipment may, however, also be used to detect irregularities in the tape application.

There are essentially two alternative embodiments of the invention. The first embodiment is based on the observation that polymer insulation undergoing a temperature change will have mechanical tensions causing emission of signals in the range of 2-20 MHz and that such signals are indicative of certain properties of the insulation. It was also observed that such signal emission was greater with increase of temperature than with decrease of temperature.

The second embodiment is based on the observation that a sensor element emitting signals in the mentioned range of frequencies, can be focused to a defined area and depth or level within the conductor insulation, from which area and depth signals are reflected back to the emitting element. The conductor insulation system of a high voltage power cable may be defined as including the two conventional semiconducting layers, i e an inner semiconducting layer provided on the cable conductor and an outer semiconducting layer provided on top of the insulation sheaths. The sensor elements are capable of being focused to defined areas within the insulation between the two semiconducting layers.

Whereas the first signals can have a duration of some 10 us, - the second signals can be monitored for a period of some 100 us to allow analyzation of the complete pattern of the reflected signals. The reflected signals can be successively analyzed to make a correlation study of the second signal patterns and they can be continuously analyzed with regard to changes in frequency, amplitude and phase, - while periodically calibrating the monitoring/analyzing means.

Above mentioned and other features and objects of the present invention will clearly appear from the following detailed description of embodiments of the invention taken in conjunction with the drawings, where
Figure 1 shows the crossection of a polymer insulated high voltage power cable,
Figure 2 schematically shows a vertical cable extrusion plant,
Figures 3 shows an alternative place for installing testing means,
Figure 4-5 show alternative ways of arranging a contact medium, and
Figures 7-8 and 9-10 show alternative ways of arranging sensing elements around a cable core.

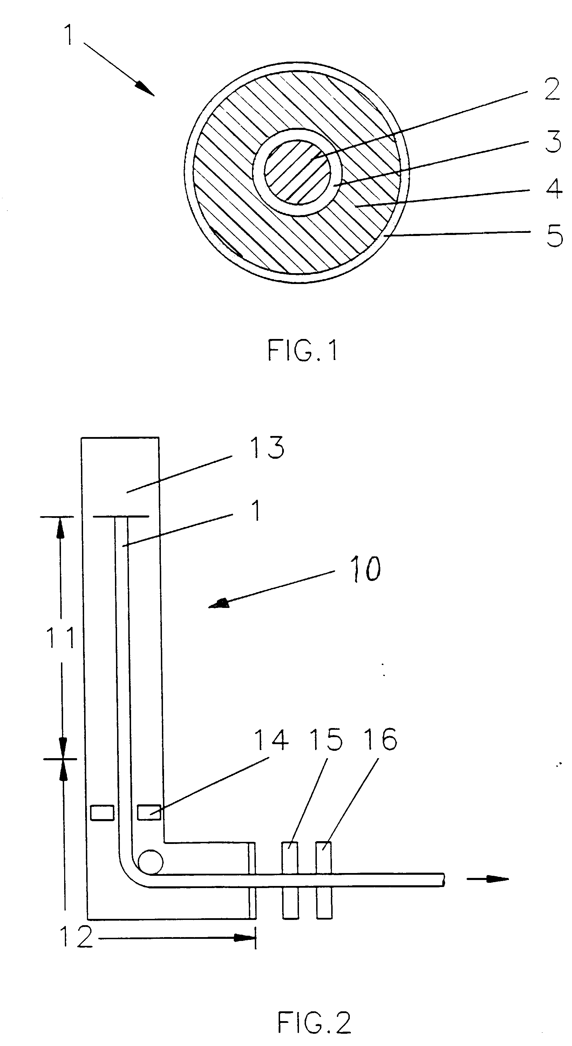

In Figure 1 is schematically illustrated the crossection of a high voltage power cable core 1 having a conductor 2, an inner semiconductor 3, layer(s) of polymer insulation 4 such as polyethylene (PEX, XLPE) and an outer semiconductor 5. Outer metal screens or sheaths and other protective layers or sheaths are not shown. The object of the invention is as mentioned to improve testing of the conductor insulation 4 for impurities and microvoids in extruded or wound, crosslinked or not crosslinked polymer insulation of a high voltage power conductor.

In Figure 2 an extrusion tower 10 of a cable manufacturing plant is divided into a curing section 11 and a cooling section 12. A cable conductor 2 introduced at the top 13 of the tower is provided with an insulation system 3, 4 and 5 in a multilayer extruder (not shown) before entering the polymer curing section 11 in order to crosslink or vulcanize the insulation system. Such a tower can be some 100 m high. The maximum curing temperature may rise to some 400 °C, whereas the temperature of the cable core 1 leaving the cooling section 12 may be some 50 °C. The heating and cooling medium may be nitrogen and the gas pressure within the plant may be some 10 bar. It should be noted that the extrusion, curing and cooling system need not be a vertical plant. The invention is equally applicable with catenary plants or horizontal plants.

Testing means 14 in accordance with the present invention can as indicated in Figure 2 be arranged within the tower cooling section 12. When such testing means is based on the principle that temperature change in the cable core causes emittance of signals indicative of impurities and microvoids, - the testing means should preferably be placed where the temperature gradient is greatest. Alternative or additional testing means 15 can be arranged after the cooling section and supplemental testing means 16 can be arranged spaced from the testing means 15. These testing means will detect signals propagated along the cable from the curing section. Use of more than one set of testing means will enable location of possible impurities/microvoids. When used within the cooling section 12, the testing means 14 should be of the pack box type. The type of testing means 14, 15 and 16 suitable for installation at the positions indicated will be explained later.

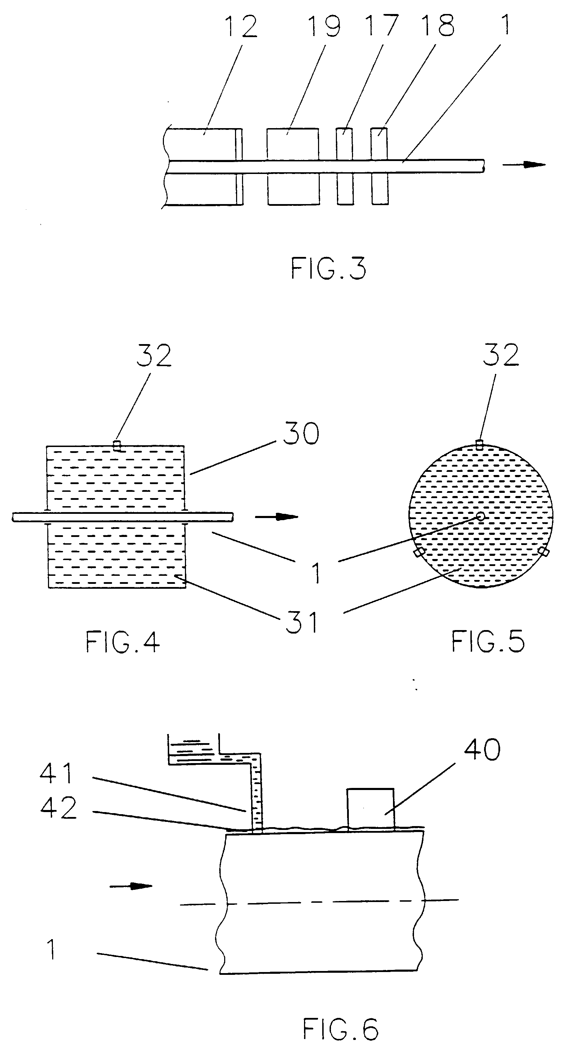

In Figure 3 is illustrated the end of a cooling section 12 with an alternative testing arrangement. Two testing stations 17 and 18 are indicated at a certain distance from each other. A heating/cooling device 19 is indicated upstream of the test equipment 17 and 18, the purpose of which is to cause generation of signals indicative of faults in the insulation system as mentioned above. Comparison and analyzation of signals detected by the two stations 17 and 18 will indicate the position of possible faults along the cable core. The cable insulation is passed through a predetermined temperature cycle, say from 60°C to 90°C and back to create mechanical tension and detectable signals from impurities and microvoids.

The testing means 14, 15, 16 in Figure 2, and the testing means 17, 18 in Figure 3 include acoustic sensing elements which are in contact with the conductor insulation surface through a contact medium such as a fluid or wax. The purpose of the contact medium is twofold, - first, - it provides an excellent transfer medium for the sound signals in the frequency range concerned, - second, - it provides a desired time lag to reduce noise when the element combines an activator function and a detector function.

In Figures 4 and 5 are schematically illustrated one way of providing the contact medium. In Figure 4, the cable core 1 is passed through a pack box 30 filled with a desirable fluid 31 like purified water or other fluid which is compatible with the cable insulation system. The fluid level in the box is maintained by means of a fluid reservoir (not shown), as some of the fluid will remain on the cable core surface when the cable core passes out of the box. In the wall of the box 30 there are arranged sensing elements 32 of which only one is shown. Electrical connections to the elements 32 are not shown. Figure 5 represents a cut through Figure 4.

In Figure 6 is illustrated an alternative way of providing the contact medium. A cable core 1 is shown somewhat enlarged relatively to the cable core shown in Figure 4. Assuming that the cable core is moved in the direction shown, a sensing element 40 (one of many) is placed very close to the cable core surface, and a dispenser 41 for a fluid or wax 42 is placed right in front of the sensing element so that there will always be a film of contact medium between the element and the cable. The film may have a thickness in the order of one millimeter. The sensing element 40 may contain several sub-elements focused to different levels or depths within the cable core insulation 1.

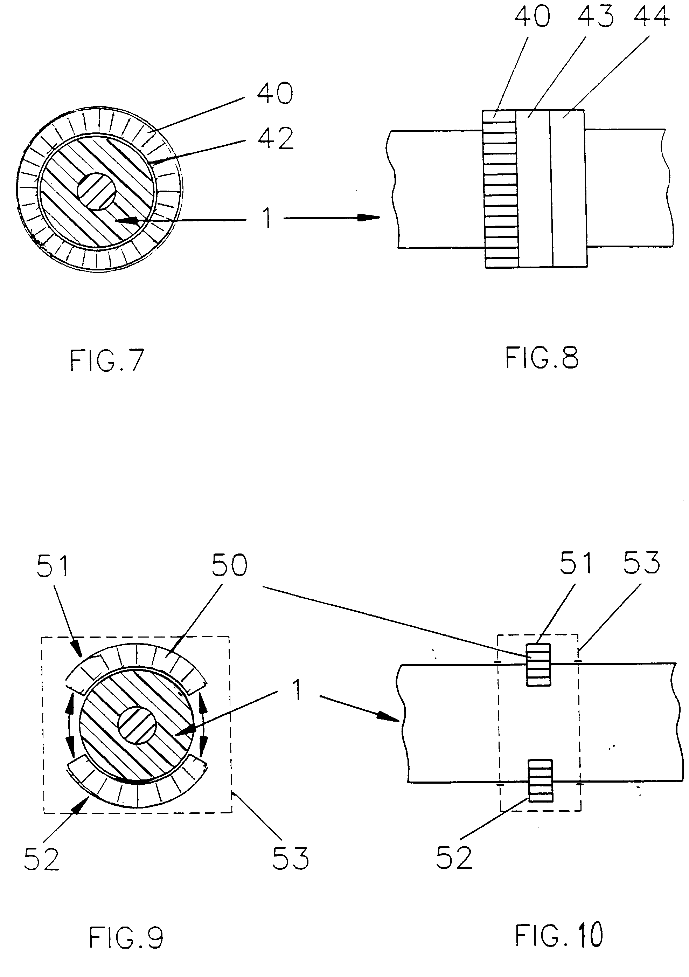

An arrangement having several stationary sensing elements as that illustrated in Figure 6, is illustrated in Figure 7 and 8. Dispenser means need not be provided for each sensing element 40, but care must be taken to ensure that a number of dispensers (not shown) provide the whole cable surface with a film 42 just in front of all sensing elements. In addition to the array of elements 40, there may be additional arrays 43 and 44. The sensors of these arrays can be focused to supervise the condition at different levels and positions.

In Figures 9 and 10 are illustrated that several sensing elements 50 can be mounted on one or more rotatable arms 51 and 52 to cover the whole cable surface. There may be several sets of arms with sensors focused to different levels within the cable insulation. Fluid dispensers can be arranged, but in order to ensure a continuous contact film between the sensing elements 50 and the cable core surface 1, the rotatable arrangement could be placed in a pack box 53, with connecting cables (not shown) leading out of the box to signal analyzing means (not shown). The rotation of the elements should be such, relatively to the longitudinal movement of the cable core, - which may be one meter per minute, - that all parts and levels of the cable insulation is monitored to detect possible impurities and microvoids greater than some 5 micrometer.

Whereas the invention has been described above in connection with testing-while-manufacturing procedures, the non-destructive testing in accordance with the invention may also be performed on cable core samples in a laboratory and on cable joints.

The above detailed description of embodiments of this invention - is described in connection with a vertical extrusion and crosslinking plant - must be taken as examples only and should not be considered as limitations on the scope of protection. For instance, whereas the means for monitoring/analyzing the second signals includes a number of signal receiving elements (32,40,50) arranged around the conductor circumference, the testing means 14, Figure 2 and testing means 17, 18, Figure 3 could be pure monitoring/-analyzing means. The signal emitting elements and the signal receiving elements can be realized as combined elements (32,40,50). Such elements can be included in the testing means 16, Figure 2, when means 14 and 15 are removed.

The invention can be used for quality assurance of extruded or wound, crosslinked or not crosslinked polymer insulation (4) of a high voltage power conductor.

## Claims

1. Method for testing properties of an electrical cable by subjecting the cable core to excitation signals (first signals) and by passing the cable through means for monitoring and analyzing signals (second signals) reflected from the cable core,
**characterized** by using first and second signals in the 2-20 MHz range for the purpose of detecting impurities and microvoids greater than 5 micrometers in extruded or wound, crosslinked or not crosslinked polymer insulation (4) of a high voltage power conductor.

2. Method according to claim 1,
**characterized** i n t h a t whereas the first signals have a duration of some 10 us, - the second signals are monitored for a period of some 100 us to allow analyzation of the complete pattern of the reflected signals.

3. Method according to claim 1 or 2,
**characterized** by successively analyzing the reflected signals to make a correlation study of the second signal patterns.

4. Method according to claim 1, 2 or 3,
**characterized** by continuously analyzing the reflected signals with regard to changes in frequency, amplitude and phase, - while periodically calibrating the monitoring/analyzing means.

5. Method according to claim 1,
**characterized** by monitoring and analyzing second signals generated or reflected from at least one defined level of the conductor insulation.

6. Method according to claim 1,
**characterized** by arranging the monitoring/-analyzing means (32,40,50) in contact with the conductor insulation surface through a contact medium (31,42) such as a fluid or wax.

7. Means for testing properties of an electrical cable by subjecting the cable core to excitation signals (first signals) and by passing the cable through means for monitoring and analyzing signals (second signals) reflected from the cable core,
**characterized in that**
the means for monitoring/analyzing the second signals includes a number of signal receiving elements (32,40,50) arranged around the conductor circumference.

8. Means according to claim 7,
**characterized in that**
the signal emitting elements and the signal receiving elements are arranged as combined elements (32,40,50).

9. Means according to claim 8,
**characterized in that**
at least some of the elements are focused to a defined area and level within the conductor insulation.

10. Means according to claim 8,
**characterized in that**
a number of the elements are stationary elements (32,40).

11. Means according to claim 8,
**characterized in that**
a number of the elements (50) are arranged to be rotated over at least a part or a sector of the conductor circumference.

12. Means for testing properties of an electrical cable by subjecting the cable core to excitation signals (first signals) and by passing the cable through means for monitoring and analyzing signals (second signals) reflected from the cable core,
**characterized in that** that the monitoring/-analyzing means (32,40,50) are arranged in contact with the conductor insulation surface through a contact medium (31,42) such as a fluid or wax.

13. Means according to claim 12,
**characterized in that**
the contact medium (42) has a thickness in the order of one millimeter, the medium being deposited on the conductor surface from at least one reservoir (41).

14. Means according to claim 12,
**characterized in that**
the contact medium (31) includes a filled pack box (30), fitted around the conductor surface, the signal elements (32) being arranged in the outer circumference of the pack box in contact with the fluid.

15. Means according to claim 12,
**characterized in that**
the contact medium is purified water or other fluid which is compatible with the conductor insulation.

16. Means for testing properties of an electrical cable by subjecting the cable core to excitation signals (first signals) and by passing the cable through means for monitoring and analyzing signals (second signals) reflected from the cable core,
**characterized in that**
the signal excitation means includes means for passing the insulated cable conductor through at least one temperature change zone (11,12;19), thereby causing generation of at least one set of said first signals within the conductor insulation.

17. Means according to claim 16,
**characterized in that**
the means for passing includes a heating/cooling arrangement (19) capable of changing the temperature of the conductor insulation through a predetermined temperature cycle.

18. Means according to claim 16,
**characterized in that**
the heating/cooling arrangement is constituted by at least one section of a normal heating/cooling zone (11,12) of a cable extrusion/crosslinking plant (10).
